# EUROPÄISCHE PATENTSCHRIFT

(11) **EP 2 781 429 B1**
(45) Veröffentlichungstag und Bekanntmachung des Hinweises auf die Patenterteilung: **16.11.2016**
(21) Anmeldenummer: 13160700.4
(22) Anmeldetag: 22.03.2013
(51) Int. Cl.: B62B 3/02, B62B 5/00, B60R 5/04

(54) **Fahrzeug und Einkaufswagen**
Vehicle and shopping trolley
Véhicule et chariot de supermarché

(43) Veröffentlichungstag der Anmeldung: 24.09.2014
(73) Patentinhaber: Magna Steyr Fahrzeugtechnik AG & Co KG, 8041 Graz (AT)
(72) Erfinder: Erlacher, Manuel, 9545 Radenthein (AT); Kriegler, Wolfgang, 8051 Graz (AT); Zachnegger, Harald, 8041 Graz (AT)
(74) Vertreter: Zangger, Bernd

(56) Entgegenhaltungen:
- EP-A1- 2 184 205
- WO-A1-2011/065808
- DE-A1- 19 956 743
- DE-A1-102006 046 094
- FR-A1- 2 811 278

## Beschreibung

### Gebiet der Erfindung

Die vorliegende Erfindung betrifft eine Einkaufsvorrichtung gemäß dem Oberbegriff von Anspruch 1, wie auch von der EP 2 184 205 A1 gezeigt.

### Stand der Technik

Fahrzeuge mit einem verschließbaren Gepäckraum sind hinlänglich bekannt, beispielsweise als Personenkraftwagen mit einem durch eine Heckklappe verschließbaren Kofferraum.

Auch Einkaufswagen sind an sich hinlänglich bekannt.

Im bekannten Stand der Technik gibt es auch einige Lösungen die zeigen, wie die Unterbringung eines Einkaufswagens in einem Gepäckraum eines Fahrzeuges erleichtert werden könnte.

So ist aus der DE 10 2005 049 421 A1 ein Einkaufswagen mit einem zum besseren Verstauen im Gepäckraum eines Fahrzeugs verkleinerbaren Rollgestell bekannt. Das Rollgestell besteht dabei aus zwei vorderen Stützen und zwei hinteren Stützen, an deren unteren Enden Rollen gelagert sind, wobei die vorderen und die hinteren Stützen beim Auftreffen auf einen am Fahrzeug befindlichen Anschlag über jeweils eine eigene Achse einklappbar sind.

Einkaufswagen mit schwenkbaren Fahrgestellsbeinen sind auch aus der DE 196 11 542 A1 und der DE 196 11 543 A1 bekannt.

Aus der DE 41 03 379 A1 ist ein Stadtfahrzeug bekannt, mit zumindest einem Sitz und einem hinter diesem vorgesehenen Gepäckraum, wobei der Sitz herausnehmbar ausgeführt ist und der Gepäckraum mittels Aufnahmen einen Einkaufsbehälter sowie ein zusammengeklapptes Fahrgestell zur Bildung eines Rollstuhls mit dem Sitz bzw. eines Einkaufswagens mit dem Einkaufsbehälter nach Herausnehmen und Aufklappen des Fahrgestells aufnimmt.

Die bekannten Lösungen zur Unterbringung eines Einkaufswagens sind jedoch nachteilig, da der Aufwand um den Einkaufswagen in das Fahrzeug zu bekommen hoch ist, wie auch der Platzbedarf des Einkaufswagens im Fahrzeug. Weiters kann es vor allem durch das Fahrgestell des Einkaufswagens zu Verschmutzungen des Gepäckraums kommen.

### Zusammenfassung der Erfindung

Es ist eine Aufgabe der Erfindung, ein verbessertes Fahrzeug mit einem verschließbaren Gepäckraum anzugeben, sowie einen dazu passenden Einkaufswagen und eine verbesserte Einkaufsvorrichtung umfassend ein derartiges Fahrzeug und einen derartigen Einkaufswagen.

Die Lösung der Aufgabe erfolgt gemäß Anspruch 1 durch ein Fahrzeug mit einem verschließbaren Gepäckraum der von einem Ladeboden begrenzt ist, wobei der Ladeboden eine zum hinteren Ende des Fahrzeugs hin offene Ausnehmung aufweist, wobei die Ausnehmung zur Aufnahme eines Wagenbodens eines Einkaufswagens ausgebildet ist. Die Ausnehmung erstreckt sich bei geöffnetem Gepäckraum in der Ebene des Ladebodens zum hinteren Ende des Fahrzeuges hin bis zum Rand des Fahrzeugs.

Die Aufnahme eines Wagenbodens in oder an der Ausnehmung kann beispielsweise so erfolgen, dass die obere Begrenzungsfläche des Wagenbodens auf der selben Höhe zu liegen kommt, wie die obere Begrenzungsfläche des Ladebodens.

Der Einkaufswagen bleibt bei der Unterbringung im Gepäckraum des Fahrzeugs bevorzugt vollständig, wird also nicht in Bestandteile zerlegt. Insbesondere bleibt der Wagenboden des Einkaufswagens mit dessen Fahrgestell verbunden, so dass das Fahrgestell des Einkaufswagens unter der Ebene des Ladebodens des Fahrzeugs zu liegen kommt. Der Einkaufswagen kann durch die nach außen offene Form der Ausnehmung von außen in den Gepäckraum des Fahrzeuges eingeschoben werden.

Durch den Wagenboden des Einkaufswagens wird bevorzugt die gesamte Ausnehmung des Ladebodens verschlossen, so dass es zu keinen oder nur geringen akustischen Belastungen oder Spritzwasser im Innenraum des Fahrzeugs kommt. Bevorzugt ist der gesamte Wagenboden des Einkaufswagens in der Ausnehmung des Ladebodens aufgenommen. Sehr vorteilhaft ist, wenn der Gepäckraum auch bei aufgenommenem Einkaufswagen verschließbar ist, beispielsweise durch eine Heckklappe des Fahrzeuges.

Bevorzugt weist der Ladeboden im Bereich der Ausnehmung Führungsschienen zur Aufnahme des Wagenbodens des Einkaufswagens auf. Die Führungsschienen sind bevorzugt am Rand der Ausnehmung angeordnet.

Besonders vorteilhaft ist es, wenn die Führungsschienen an zwei längs verlaufenden Stirnwänden der Ausnehmung ausgebildet sind. Die Längsrichtung ist dabei die Richtung in welcher ein Einkaufswagen von außen in die Ausnehmung eingebracht wird. Führungsschienen können auch alternativ oder zusätzlich beispielsweise an der Oberseite im Bereich des Randes der Ausnehmung des Ladebodens angeordnet sein.

Mit Hilfe der Führungsschienen kann ein Einkaufswagen komfortabel in den Gepäckraum des Fahrzeuges eingeschoben werden.

Bevorzugt weist der Ladeboden im Bereich der Ausnehmung Dichtflächen auf. Die Dichtflächen können der Kontur des Einkaufswagens bzw. des Wagenbodens angepasst sein und bevorzugt an der Oberseite, aber auch der Unterseite und/oder Stirnwänden der Ausnehmung angeordnet sein.

Gemäß einer Ausführungsform ist ein Mechanismus vorgesehen, durch den die Ausnehmung verschließbar ist, wenn kein Einkaufswagen in der Ausnehmung aufgenommen ist. Dadurch bleibt der Boden des Gepäckraums auch dann verschlossen, wenn sich kein Einkaufswagen in der Aufnahme befindet. Insbesondere kann der Mechanismus so ausgebildet sein, dass die Ausnehmung automatisch verschlossen wird, sobald ein Einkaufswagen aus der Ausnehmung entfernt wird.

Die Lösung der Aufgabe erfolgt auch mit einem Einkaufswagen mit einem Wagenboden, wobei der Wagenboden zur Aufnahme in der Ausnehmung eines oben beschriebenen Fahrzeuges ausgebildet ist. Der Einkaufswagen muss dazu besondere Ausbildungen aufweisen, die die Aufnahme in die Ausnehmung des Ladebodens eines Fahrzeuges ermöglichen.

Insbesondere kann der Einkaufswagen zur Aufnahme in Führungsschienen im Bereich der Ausnehmung des Ladebodens ausgeführt sein und somit der Wagenboden Elemente aufweisen, die ein Einschieben in derartige Führungsschienen ermöglichen.

Der Wagenboden eines derartigen Einkaufswagens ist bevorzugt als Vollfläche ausgeführt, um die Ausnehmung eines Ladebodens gut zu verschließen.

Bevorzugt weist der Einkaufswagen ein Fahrgestell auf, wobei das Fahrgestell gegenüber dem Wagenboden des Einkaufswagens anhebbar ist. Hierdurch kann das Fahrgestell des Einkaufswagens hochgehoben werden, wenn der Einkaufswagen in einem Fahrzeug aufgenommen ist, so dass beispielsweise Räder des Einkaufswagens ausreichend von der Fahrbahn beabstandet sind.

Besonders bevorzugt ist das Fahrgestell in einer angehobenen Position verriegelbar.

Bevorzugt ist das Fahrgestell über ein Hebelsystem anhebbar und/oder verriegelbar. In einer anderen Variante kann das Fahrgestell beispielsweise elektrisch hochgehoben und/oder verriegelt werden.

Gemäß einer Ausführungsform ist das Anheben und/oder Verriegeln des Fahrgestells über einen Einkaufswagengriff auslösbar. Hierdurch ist eine besonders bequeme Betätigung ermöglicht, da die Hände nicht vom Einkaufswagengriff gelöst werden müssen.

In einer Ausführungsform ist das Anheben und/oder Verriegeln des Fahrgestells über einen Bedienhebel auslösbar.

Besonders bevorzugt ist das Anheben und/oder Verriegeln des Fahrgestells durch das Zusammenwirken eines fahrzeugseitigen Betätigungselements mit einem einkaufswagenseitigen Betätigungselement auslösbar. Insbesondere kann das fahrzeugseitige Betätigungselement ein Keil sein. Das einkaufswagenseitig Betätigungselement kann dann eine schräge Gleitfläche sein, so dass das Anheben und/oder Verriegeln dadurch ausgelöst wird, dass die Gleitfläche des Einkaufswagens über einen Keil am Fahrzeug geschoben wird, insbesondere während der Einkaufswagen in das Fahrzeug eingeschoben wird.

Die Auslösung und Verriegelung des Fahrgestells kann auch vorteilhaft durch eine Kombination der oben genannten Auslösemechanismen erfolgen, beispielsweise kann mit einem separaten Bedienhebel das Fahrgestell angehoben und mittels einer Dreh- oder Schwenkbewegung am Einkaufswagengriff verriegelt werden. In einer anderen Ausführungsform kann mittels Keil und Gleitfläche das Fahrgestell beim Einschieben des Einkaufswagens in das Fahrzeug angehoben und danach mittels Einkaufswagengriff verriegelt werden.

Die Aufgabe wird gelöst durch eine Einkaufsvorrichtung umfassend ein erfindungsgemäßes Fahrzeug zusammen mit einem erfindungsgemäßen Einkaufswagen. Dabei sind der Einkaufswagen und das Fahrzeug so ausgebildet, dass der Wagenboden des Einkaufswagens in der Ausnehmung des Ladebodens des Gepäckraums des Fahrzeuges aufgenommen werden kann.

Weiterbildungen der Erfindung sind in den abhängigen Ansprüchen, der Beschreibung sowie den beigefügten Zeichnungen angegeben.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Fahrzeuges in welches ein erfindungsgemäßer Einkaufswagen aufgenommen wird.
- Fig. 2: ist eine dreidimensionale Darstellung eines Ladebodens.
- Fig. 3, 4, 5: sind Darstellungen eines erfindungsgemäßen Einkaufswagens in einer ersten Ausführungsform.
- Fig. 6, 7, 8, 9: sind Darstellungen eines erfindungsgemäßen Einkaufswagens in einer zweiten Ausführungsform.
- Fig. 10, 11, 12, 13: sind Darstellungen eines erfindungsgemäßen Einkaufswagens in einer dritten Ausführungsform.
- Fig. 14: ist eine dreidimensionale Darstellung eines Ladebodens.

### Detaillierte Beschreibung der Erfindung

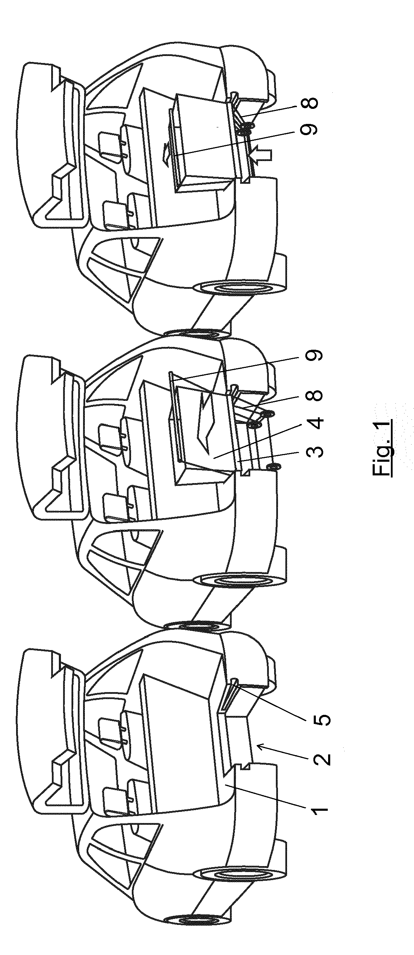

In Fig. 1 ist ein erfindungsgemäßes Fahrzeug in welches ein erfindungsgemäßer Einkaufswagen 4 aufgenommen wird dargestellt. In der linken Abbildung der Fig. 1 ist das Fahrzeug noch ohne Einkaufswagen dargestellt. Das Fahrzeug verfügt über einen, durch eine nach oben öffnende Heckklappe, verschließbaren Gepäckraum der von einem Ladeboden 1 begrenzt ist, wobei der Ladeboden 1 eine nach hinten (zum hinteren Ende des Fahrzeuges hin) offene Ausnehmung 2 aufweist. Die Ausnehmung 2 ist zur Aufnahme eines Wagenbodens 3 eines Einkaufswagens 4 ausgebildet, indem die Ausnehmung 2 an ihren Stirnwänden Führungsschienen 5 aufweist. Wie in der mittleren Abbildung der Fig. 1 zu sehen kann ein Einkaufswagen 4 in die Ausnehmung 2 des Fahrzeuges geschoben werden, so dass der Wagenboden 3 oder sonstige am Einkaufswagen 4 ausgebildete Eingriffselemente in den Führungsschienen 5 aufgenommen werden. Der Wagenboden 3 bildet zusammen mit dem Ladeboden 1 einen kompletten, geschlossenen Boden des Fahrzeuges wenn ein Einkaufswagen 4 in die Ausnehmung 2 aufgenommen ist. Wie in der rechten Abbildung der Fig. 1 gezeigt, kann der Einkaufswagen 4 nach der Beladung in das Fahrzeug gesichert werden, so dass es zu keinem unbeabsichtigten Lösen des Einkaufswagens 4 aus dem Gepäckraum kommen kann. Das
Fahrgestell 8 kann beispielsweise über ein Hebelsystem bei Betätigung des Einkaufswagengriffes 9 nach oben angehoben und der Oberteil des Einkaufswagens inklusive Einkaufswagengriff 9 nach vorne geschwenkt und verriegelt werden. In dieser Position des Einkaufswagens 4 kann die Heckklappe des Fahrzeuges geschlossen werden und ist das Fahrzeug fahrbereit.

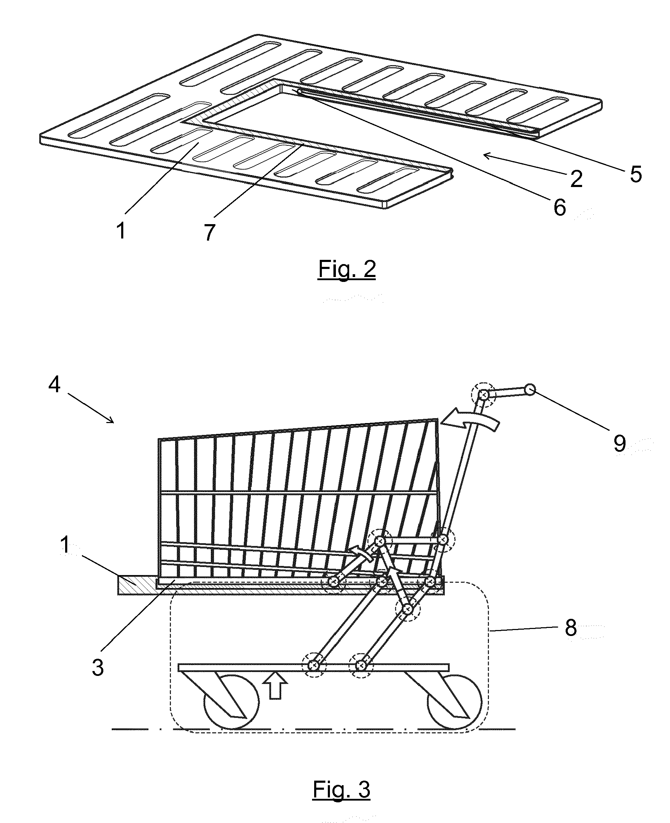

In Fig. 2 ist ein Ladeboden 1 eines Fahrzeuges wie in Fig. 1 genauer dargestellt. Der Ladeboden 1 weist an zwei Stirnwänden 6 einer Ausnehmung 2 jeweils eine Führungsschiene 5 auf. Am Rand der Ausnehmung 2 sind an der Oberseite des Ladebodens 1 dreiseitig Dichtflächen 7 ausgebildet.

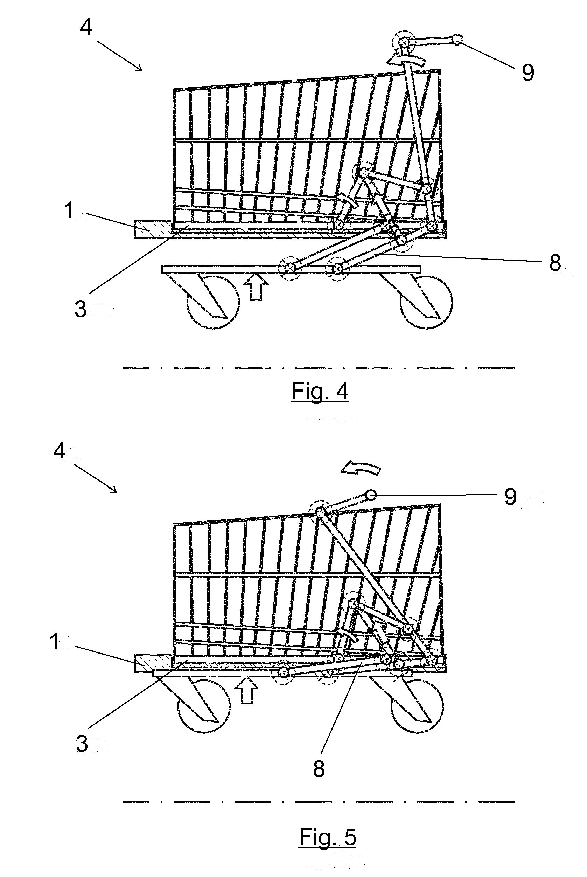

Fig. 3, 4, 5 sind Darstellungen eines erfindungsgemäßen Einkaufswagens 4 in einer ersten Ausführungsform. Der Einkaufswagen 4 ist jeweils aufgenommen in einen Ladeboden 1 dargestellt. Wie in Fig. 3 zu sehen, ist das Fahrgestell 8 zunächst noch ausgefahren, in einer Gebrauchsposition wo die Räder des Fahrgestells 8 eine als strichpunktierte Linie dargestellte Grundfläche berühren. Über den Einkaufswagengriff 9 wird, wie in Fig. 4 und 5 ersichtlich, ein Hebelsystem betätigt, dass dazu eingerichtet ist, das Fahrgestell 8 anzuheben und gleichzeitig den Einkaufswagengriff 9 nach vorne zu schwenken und gegebenenfalls zu verriegeln.

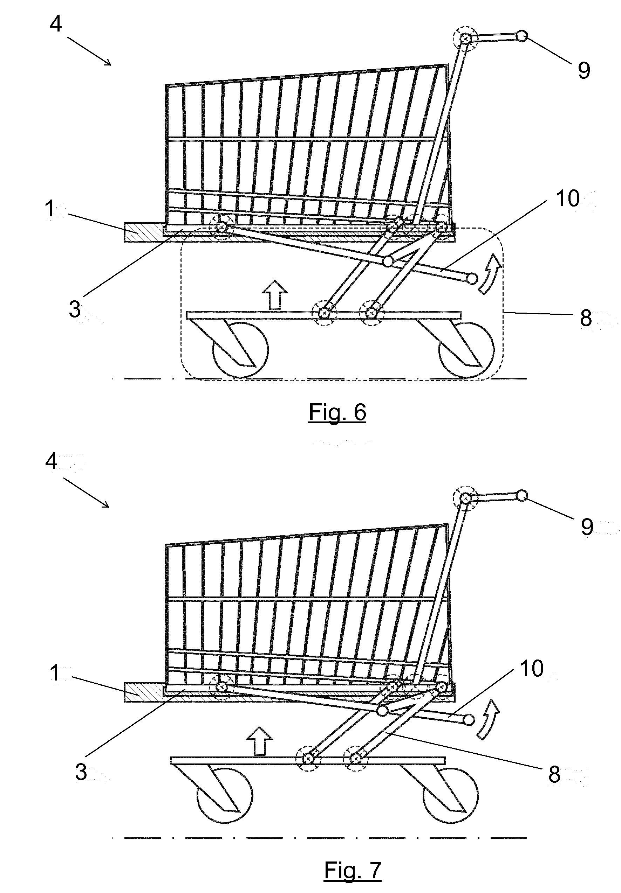

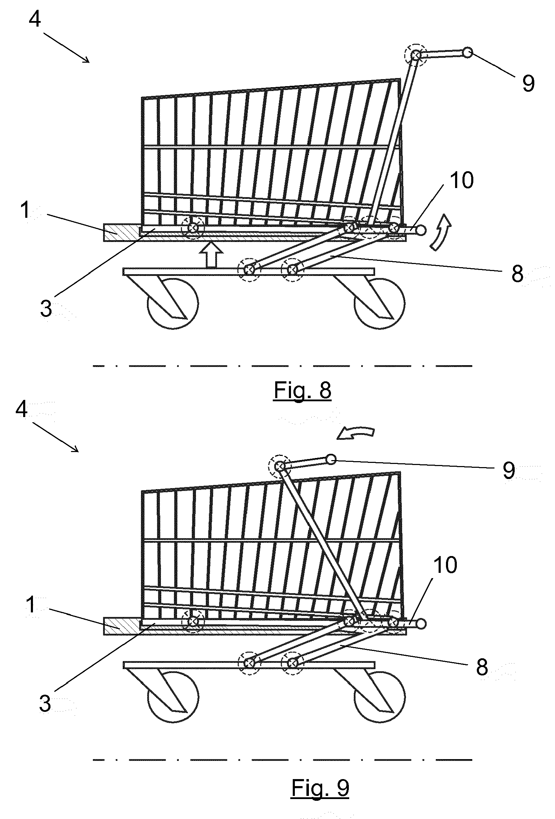

Alternativ kann in einer Ausführung eines Einkaufswagens wie in den Fig. 6, 7, 8 und 9 dargestellt, die Betätigung des Hebelsystems über einen Bedienhebel 10 erfolgen, so dass das Fahrgestell 8 nach oben gezogen wird. Der Einkaufswagengriff 9 kann (Fig. 9) separat in eine Verriegelungsposition geschwenkt werden.

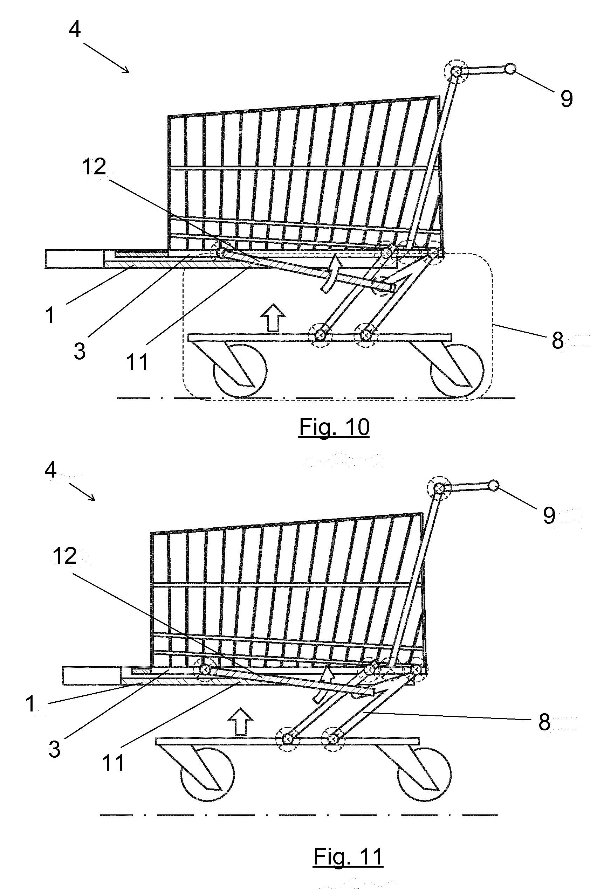

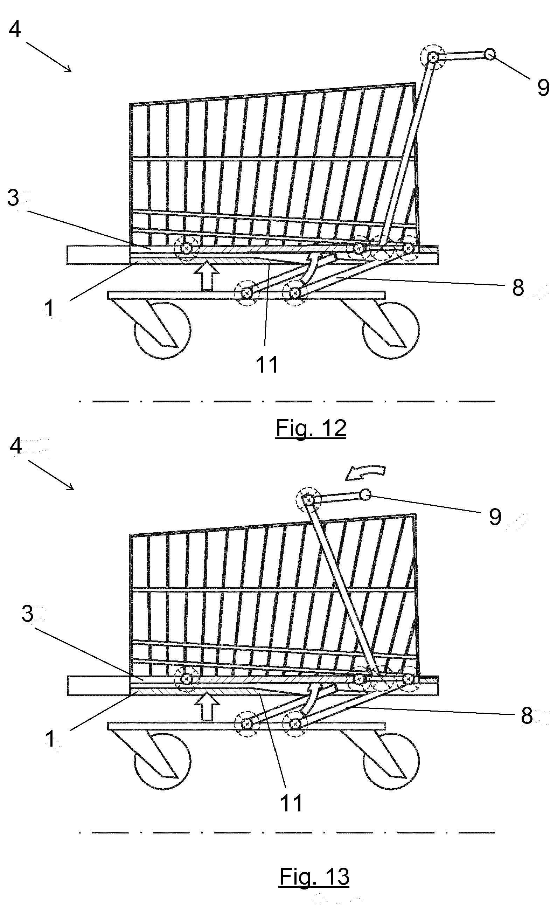

In einer weiteren Ausführungsform, dargestellt in den Fig. 10, 11, 12 und 13, erfolgt die Betätigung eines Hebelsystems zur Anhebung des Fahrgestells 8 durch einen Keil 11, der am Ladeboden 1 ausgebildet ist zusammen mit einer schrägen Gleitfläche 12 die am Einkaufswagen 4 ausgebildet ist. Während der Einkaufswagen 4 in die Ausnehmung 2 des Ladebodens 1 geschoben wird, hebt sich ein Betätigungshebel des Einkaufswagens 4, der die schräge Gleitfläche 12 aufweist, an, und bewirkt dadurch die Anhebung des gesamten Fahrgestells 8. Der Einkaufswagengriff 9 kann wieder wie dargestellt separat in eine Verriegelungsposition bewegt werden.

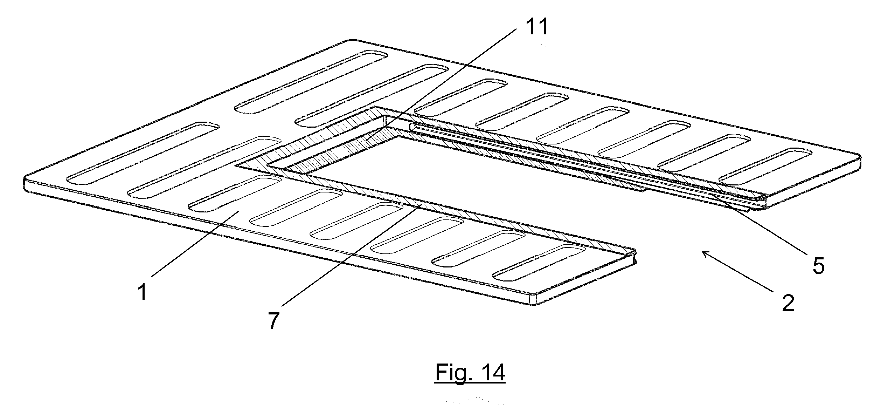

Der Ladeboden 1, der in der Ausführungsform der Fig. 10 bis 13 Verwendung findet, ist in Fig. 14 dargestellt. Er weist einen im Verlauf der Ausnehmung 2 zum vorderen Ende eines Fahrzeuges hin ansteigend verlaufenden Keil 11 auf. Der Keil 11 ist dabei so ausgeführt, dass die Ausnehmung 2 dadurch nicht verdeckt wird.

### Bezugszeichenliste

- 1: Ladeboden
- 2: Ausnehmung
- 3: Wagenboden
- 4: Einkaufswagen
- 5: Führungsschiene
- 6: Stirnwand
- 7: Dichtfläche
- 8: Fahrgestell
- 9: Einkaufswagengriff
- 10: Bedienhebel
- 11: Keil
- 12: schräge Gleitfläche

## Patentansprüche

1. Einkaufsvorrichtung umfassend ein Fahrzeug mit einem verschließbaren Gepäckraum der von einem Ladeboden (1) begrenzt ist und einen Einkaufswagen mit einem Wagenboden (3), wobei der Ladeboden (1) eine zum hinteren Ende des Fahrzeugs hin offene Ausnehmung (2) aufweist, und der Einkaufswagen (4) ein Fahrgestell (8) aufweist, **dadurch gekennzeichnet, dass** die Ausnehmung (2) zur Aufnahme des Wagenbodens (3) des Einkaufswagens (4) ausgebildet ist und der Wagenboden (3) zur Aufnahme in der Ausnehmung (2) des Fahrzeuges ausgebildet ist, wobei bei der Aufnahme des Wagenbodens (3) des Einkaufswagens (4) in der Ausnehmung (2) der Wagenboden des Einkaufswagens mit dessen Fahrgestell verbunden bleibt, so dass das Fahrgestell des Einkaufswagens unter der Ebene des Ladebodens des Fahrzeugs zu liegen kommt.

2. Einkaufsvorrichtung nach Anspruch 1,
**dadurch gekennzeichnet, dass** der Ladeboden (1) im Bereich der Ausnehmung (2) Führungsschienen (5) zur Aufnahme des Wagenbodens (3) des Einkaufswagens (4) aufweist.

3. Einkaufsvorrichtung nach Anspruch 2,
**dadurch gekennzeichnet, dass** die Führungsschienen (5) an zwei längs verlaufenden Stirnwänden (6) der Ausnehmung (2) ausgebildet sind.

4. Einkaufsvorrichtung nach zumindest einem der zuvor genannten Ansprüche,
**dadurch gekennzeichnet, dass** der Ladeboden (1) im Bereich der Ausnehmung (2) Dichtflächen (7) aufweist.

5. Einkaufsvorrichtung nach zumindest einem der zuvor genannten Ansprüche,
**dadurch gekennzeichnet, dass** ein Mechanismus vorgesehen ist, durch den die Ausnehmung (2) verschließbar ist, wenn kein Einkaufswagen (4) in der Ausnehmung (2) aufgenommen ist, insbesondere automatisch verschließbar.

6. Einkaufsvorrichtung nach Anspruch 1
**dadurch gekennzeichnet, dass** der Wagenboden (3) zur Aufnahme in Führungsschienen (5) im Bereich der Ausnehmung (2) ausgebildet ist.

7. Einkaufsvorrichtung nach zumindest einem der zuvor genannten Ansprüche,
**dadurch gekennzeichnet, dass** der Einkaufswagen (4) ein Fahrgestell (8) aufweist, wobei das Fahrgestell (8) gegenüber dem Wagenboden (3) des Einkaufswagens (4) anhebbar ist.

8. Einkaufsvorrichtung nach Anspruch 7,
**dadurch gekennzeichnet, dass** das Fahrgestell (8) in einer angehobenen Position verriegelbar ist.

9. Einkaufsvorrichtung nach Anspruch 7 oder 8,
**dadurch gekennzeichnet, dass** das Fahrgestell (8) über ein Hebelsystem anhebbar und/oder verriegelbar ist.

10. Einkaufsvorrichtung nach zumindest einem der Ansprüche 7 bis 9,
**dadurch gekennzeichnet, dass** das Anheben und/oder Verriegeln des Fahrgestells (8) über einen Einkaufswagengriff (9) auslösbar ist.

11. Einkaufsvorrichtung nach zumindest einem der Ansprüche 7 bis 10,
**dadurch gekennzeichnet, dass** das Anheben und/oder Verriegeln des Fahrgestells (8) über einen Bedienhebel (10) auslösbar ist.

12. Einkaufsvorrichtung nach zumindest einem der Ansprüche 7 bis 11,
**dadurch gekennzeichnet, dass** das Anheben und/oder Verriegeln des Fahrgestells (8) durch das Zusammenwirken eines fahrzeugseitigen Betätigungselements mit einem einkaufswagenseitigen Betätigungselement auslösbar ist, wobei insbesondere das fahrzeugseitige Betätigungselement ein Keil (11) ist und das einkaufswagenseitig Betätigungselement eine schräge Gleitfläche (12) ist.

## Claims

1. Shopping device comprising a vehicle with a closable luggage compartment which is bounded by a loading floor (1), and a shopping trolley with a trolley base (3), wherein the loading floor (1) has a recess (2) which is open towards the rear end of the vehicle, and the shopping trolley (4) has an underframe (8), **characterized in that** the recess (2) is designed for accommodating the trolley base (3) of the shopping trolley (4), and the trolley base (3) is designed for accommodation in the recess (2) of the vehicle, wherein, when the trolley base (3) of the shopping trolley (4) is accommodated in the recess (2), the trolley base of the shopping trolley remains connected to the underframe thereof, and therefore the underframe of the shopping trolley comes to lie below the plane of the loading floor of the vehicle.

2. Shopping device according to Claim 1, **characterized in that** the loading floor (1) has, in the region of the recess (2), guide rails (5) for accommodating the trolley base (3) of the shopping trolley (4).

3. Shopping device according to Claim 2, **characterized in that** the guide rails (5) are formed on two longitudinally extending end walls (6) of the recess (2).

4. Shopping device according to at least one of the abovementioned claims, **characterized in that** the loading floor (1) has sealing surfaces (7) in the region of the recess (2).

5. Shopping device according to at least one of the abovementioned claims, **characterized in that** a mechanism is provided by means of which the recess (2) is closable, in particular is automatically closable, if no shopping trolley (4) is accommodated in the recess (2).

6. Shopping device according to Claim 1, **characterized in that** the trolley base (3) is designed for accommodation in guide rails (5) in the region of the recess (2).

7. Shopping device according to at least one of the abovementioned claims, **characterized in that** the shopping trolley (4) has an underframe (8), wherein the underframe (8) is raisable in relation to the trolley base (3) of the shopping trolley (4).

8. Shopping device according to Claim 7, **characterized in that** the underframe (8) is lockable in a raised position.

9. Shopping device according to Claim 7 or 8, **characterized in that** the underframe (8) is raisable and/or lockable via a lever system.

10. Shopping device according to at least one of Claims 7 to 9, **characterized in that** the raising and/or locking of the underframe (8) can be triggered via a shopping trolley handle (9).

11. Shopping device according to at least one of Claims 7 to 10, **characterized in that** the raising and/or locking of the underframe (8) can be triggered via an operating lever (10).

12. Shopping device according to at least one of Claims 7 to 11, **characterized in that** the raising and/or locking of the underframe (8) can be triggered by the interaction of an actuating element on the vehicle with an actuating element on the shopping trolley, wherein in particular the actuating element on the vehicle is a wedge (11) and the actuating element on the shopping trolley is an oblique sliding surface (12).

## Revendications

1. Dispositif de supermarché comprenant un véhicule avec un espace pour marchandises refermable qui est limité par un fond de chargement (1) et un chariot de supermarché comprenant un fond de chariot (3), le fond de chargement (1) présentant un évidement (2) ouvert vers l'extrémité arrière du véhicule et le chariot de supermarché (4) présentant un châssis (8), **caractérisé en ce que** l'évidement (2) est réalisé pour recevoir le fond de chariot (3) du chariot de supermarché (4) et le fond de chariot (3) est réalisé pour être reçu dans l'évidement (2) du véhicule, dans lequel, lorsque le fond de chariot (3) du chariot de supermarché (4) est reçu dans l'évidement (2), le fond de chariot du chariot de supermarché reste connecté à son châssis de telle sorte que le châssis du chariot de supermarché vienne se placer sous le plan du fond de chargement du véhicule.

2. Dispositif de supermarché selon la revendication 1,
**caractérisé en ce que** le fond de chargement (1) présente, dans la région de l'évidement (2), des rails de guidage (5) pour recevoir le fond de chariot (3) du chariot de supermarché (4).

3. Dispositif de supermarché selon la revendication 2,
**caractérisé en ce que** les rails de guidage (5) sont réalisés au niveau de deux parois frontales s'étendant longitudinalement (6) de l'évidement (2).

4. Dispositif de supermarché selon au moins l'une quelconque des revendications précédentes,
**caractérisé en ce que** le fond de chargement (1) présente, dans la région de l'évidement (2), des surfaces d'étanchéité (7).

5. Dispositif de supermarché selon au moins l'une quelconque des revendications précédentes,
**caractérisé en ce qu'**il est prévu un mécanisme permettant de fermer l'évidement (2), en particulier de le fermer automatiquement, lorsqu'aucun chariot de supermarché (4) n'est reçu dans l'évidement (2).

6. Dispositif de supermarché selon la revendication 1,
**caractérisé en ce que** le fond de chariot (3) est réalisé pour être reçu dans les rails de guidage (5) dans la région de l'évidement (2).

7. Dispositif de supermarché selon au moins l'une quelconque des revendications précédentes,
**caractérisé en ce que** le chariot de supermarché (4) présente un châssis (8), le châssis (8) pouvant être soulevé par rapport au fond de chariot (3) du chariot de supermarché (4).

8. Dispositif de supermarché selon la revendication 7,
**caractérisé en ce que** le châssis (8) peut être verrouillé dans une position soulevée.

9. Dispositif de supermarché selon la revendication 7 ou 8,
**caractérisé en ce que** le châssis (8) peut être soulevé et/ou verrouillé par le biais d'un système de levier.

10. Dispositif de supermarché selon au moins l'une quelconque des revendications 7 à 9, **caractérisé en ce que** le soulèvement et/ou le verrouillage du châssis (8) peut être déclenché par le biais d'une poignée de chariot de supermarché (9).

11. Dispositif de supermarché selon au moins l'une quelconque des revendications 7 à 10, **caractérisé en ce que** le soulèvement et/ou le verrouillage du châssis (8) peuvent être déclenchés par un levier de commande (10).

12. Dispositif de supermarché selon au moins l'une quelconque des revendications 7 à 11, **caractérisé en ce que** le soulèvement et/ou le verrouillage du châssis (8) peuvent être déclenchés par la coopération d'un élément de commande du côté du véhicule avec un élément de commande du côté du chariot de supermarché, l'élément de commande du côté du véhicule étant notamment une clavette (11) et l'élément de commande du côté du chariot de supermarché étant une surface de coulissement oblique (12).
